# FASCICULE DE BREVET EUROPEEN

(11) **EP 2 328 741 B1**
(45) Date de publication et mention de la délivrance du brevet: **04.09.2019**
(21) Numéro de dépôt: 09800045.8
(22) Date de dépôt: 21.07.2009
(51) Int. Cl.: B29C 70/08, B29C 70/02, B29C 70/38, B29C 70/22, B29C 70/16, B29C 70/88, B29C 70/78, B29C 70/58, B32B 5/28, B32B 15/08, B32B 15/14, B32B 27/06, B32B 33/00, B32B 37/26, B32B 37/12

(54) **PROCÉDÉ DE MÉTALLISATION D'UNE PIÈCE EN MATÉRIAU COMPOSITE ET PIECE**
VERFAHREN ZUR METALLISIERUNG EINES WERKSTÜCKS AUS EINEM VERBUNDSTOFF UND WERKSTÜCK
METHOD FOR THE METALLIZATION OF A PART MADE OF A COMPOSITE MATERIAL AND PART

(30) Priorité: 24.07.2008 FR 0855078
(43) Date de publication de la demande: 08.06.2011
(73) Titulaire: AIRBUS (SAS), 31700 Blagnac (FR)
(72) Inventeur: LEFEBURE, Patrice, F-92240 Malakoff (FR)
(74) Mandataire: Gicquel, Olivier Yves Gérard
(86) Numéro de dépôt international: PCT/EP2009/059352
(87) Numéro de publication internationale: WO 2010/010084

(56) Documents cités:
- EP-A- 0 617 435
- EP-A- 1 275 682
- EP-A- 1 422 048
- WO-A-2008/015082
- US-A- 4 746 389
- US-A- 5 078 821
- US-A- 5 252 160
- US-A1- 2007 029 038

## Description

La présente invention appartient au domaine de la fabrication de pièces en matériau composite, et concerne plus particulièrement la métallisation de telles pièces en vue notamment d'une protection contre la foudre.

L'utilisation de matériaux composites est de nos jours largement répandue dans de nombreux domaines industriels, comme par exemple la construction automobile, la construction aéronautique ou encore la construction de bâtiments, du fait notamment du gain de masse qu'ils permettent d'obtenir par rapport à des matériaux conventionnels, à propriétés mécaniques équivalentes. Des exemples de matériaux composites sont donnés notamment dans les documents EP1275682, EP1422048, US 5078821, US 2007/029038 et EP 0617435.

Les matériaux composites comportant des fibres, en particulier longues, tissées ou non, minérales ou organiques, qui sont maintenues par une matrice en résine organique, thermodurcissable ou thermoplastique hautes performances, sont de nos jours largement utilisés dans la fabrication de pièces de structure d'aéronefs.

Cependant, de tels matériaux composites, du fait qu'ils sont généralement électriquement isolants ou faiblement conducteurs, souffrent d'un mauvais comportement en cas d'impact de foudre, ce qui nécessite des précautions pour la fabrication de pièces de structure d'aéronefs, qui sont directement exposées au risque d'impact de foudre.

Le brevet US5252160 décrit une méthode de fabrication d'un radôme selon laquelle une couche métallique est disposée sur une surface d'une partie femelle d'un moule, puis une structure composite thermoplastique est mise en place par-dessus cette couche métallique. Une partie mâle du moule est placée sur la structure composite thermoplastique puis une cuisson de l'ensemble est réalisée.

Pour améliorer la conductivité intrinsèque et la tenue à la foudre des pièces en matériau composite thermoplastique hautes performances, il est connu de déposer sur une telle pièce un grillage bon conducteur électrique, généralement en bronze, et de déposer un film en résine thermoplastique sur et éventuellement sous ledit grillage (voir par exemple le brevet US 4746389). Le ou les films en résine et la couche structurale sont ensuite consolidés au travers des ouvertures du grillage par fusion du film en résine thermoplastique.

La couche structurale est le plus souvent réalisée en empilant des plis comportant des fibres imprégnées de résine, qui sont déposés de manière automatique au moyen de dispositifs de pose automatique de plis.

La pose automatique des plis est souhaitée pour avoir des coûts de fabrication plus économiques, et est également avantageuse dans certains cas pour pouvoir respecter les spécifications de conception de certaines pièces, par exemple des pièces de grandes dimensions et/ou non-développables c'est-à-dire présentant des courbures suivant deux directions.

Le procédé de métallisation décrit est difficile à mettre en oeuvre de façon automatique pour la fabrication de telles pièces, du fait notamment des dimensions du grillage et des surfaces non-développables devant être recouvertes, et on comprend que de nouveaux moyens permettant la fabrication de telles pièces de façon automatisée sont nécessaires.

La présente invention se propose de résoudre les problèmes susmentionnés au moyen d'un procédé de fabrication par dépôt de plis d'une pièce de structure d'aéronef exposée à la foudre selon la revendication 1.

Suivant d'autres caractéristiques du procédé selon l'invention :
- la couche de liaison du pli de métallisation comporte des charges minérales, représentant de préférence entre 1% et 5% en masse du pli de métallisation,
- la résine thermoplastique de la couche de liaison du pli de métallisation est en poly-éther-éther-cétone, en poly-éther-cétone-cétone ou en poly-étherimide,
- on dépose le pli de métallisation sur la face extérieure de la couche structurale sous la forme de rubans hybrides disposés bord à bord suivant une orientation privilégiée,
- la consolidation de chaque ruban hybride avec la couche structurale est effectuée en continu en même temps que la dépose dudit ruban hybride,
- on dépose chaque pli structural sous la forme de rubans structuraux disposés bord à bord et les rubans hybrides ont des largeurs voisines de celles des rubans structuraux, de préférence les rubans hybrides et structuraux sont déposés avec un dispositif de dépose automatique utilisé pour déposer les rubans structuraux.

L'invention concerne également une pièce de structure d'aéronef exposée à la foudre, selon la revendication 8.

Suivant d'autres caractéristiques de la pièce selon l'invention :
- la couche de liaison comporte des charges minérales, représentant entre 1% et 5% en masse de la couche de liaison plus la couche métallique,
- la résine thermoplastique de la couche structurale est à base de poly-éther-éther-cétone ou de poly-éther-cétone-cétone ou de poly-étherimide, et de préférence la résine thermoplastique de la couche de liaison est de même type que la matrice,
- les fibres de la couche structurale sont des fibres longues ou continues de carbone.

La description suivante de modes de l'invention est faite en se référant aux figures, dans lesquelles des références identiques désignent des éléments identiques ou analogues, qui représentent de manière non limitative :
- Figures 1a, 1b et 1c : des vues schématiques en coupe de trois modes de réalisation d'un pli de métallisation selon l'invention,
- Figure 2 : une vue éclatée schématique en coupe des différentes couches d'une pièce en matériau composite métallisée suivant l'invention,
- Figure 3 : un schéma de principe d'un exemple de dispositif de pose et de consolidation en continu de plis pour la fabrication d'un matériau composite thermoplastique,
- Figures 4a, 4b et 4c : des vues schématiques en coupe de pièces en matériau composite métallisées selon l'invention. La présente invention concerne un procédé de fabrication d'une pièce en matériau composite de structure d'aéronef (avion, hélicoptère, etc.) devant être protégé contre les effets de la foudre par un pli hybride de métallisation, ainsi que ladite pièce.

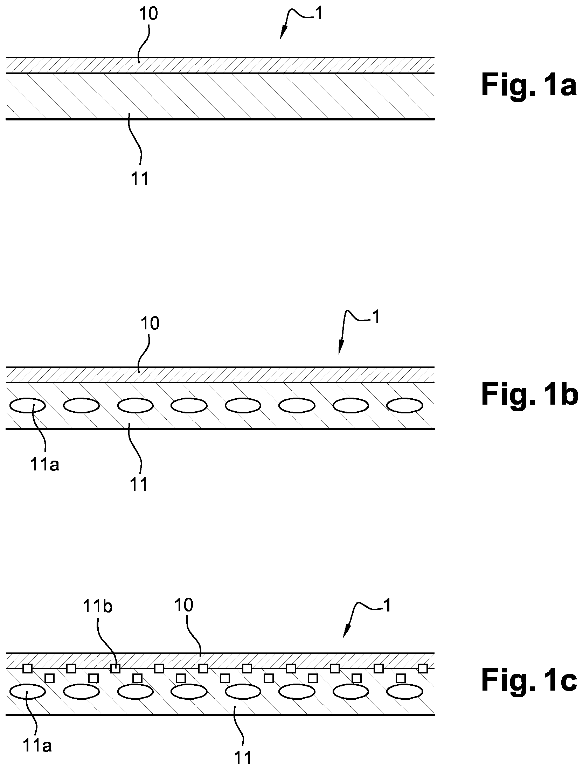

Le pli hybride 1 représenté de façon schématique sur la figure 1a, est une feuille mince comportant dans une épaisseur deux couches superposées et solidaires : une couche métallique 10 et une couche de liaison 11. De préférence, le pli hybride 1 est constitué uniquement de la couche métallique 10 et de la couche de liaison 11.

La couche métallique 10, destinée à être agencée du côté de la pièce 3 étant le plus exposé à la foudre, est essentiellement continue et est de préférence constituée d'un matériau présentant des propriétés de bonne conductivité électrique par unité de masse, par exemple réalisée avec une ou des feuilles d'aluminium ou de cuivre.

Par « essentiellement continue », on entend que la couche métallique 10 est homogène, c'est-à-dire que l'épaisseur de ladite couche métallique est sensiblement la même en tout point, contrairement aux grillages, utilisés selon l'état de l'art pour la métallisation de structures d'aéronefs, qui comportent des ouvertures sensiblement périodiques. La couche métallique 10 peut toutefois comporter dans certains cas des ouvertures, par exemple associées à des ouvertures de la pièce 3.

La couche de liaison 11 est réalisée dans une résine thermoplastique, de préférence hautes performances, par exemple à base de poly-éther-éther-cétone (PEEK), de poly-éther-cétone-cétone (PEKK), de poly-étherimide (PEI), de polysulfure de phénylène (PPS), etc.

Dans un mode préféré de réalisation du pli hybride 1, représenté sur la figure 1b, la couche de liaison 11 est renforcée par des fibres minérales 11a. Les fibres minérales 11a sont de préférence des fibres de verre, tissées ou agencées en feutre, agencées de façon sensiblement parallèle à la couche métallique 10, éventuellement en plusieurs sous-couches, ou encore des fibres courtes dispersées dans la couche de liaison 11. Les fibres minérales 11a renforcent la couche de liaison 11 dans des proportions comprises entre 10% et 30% en masse du pli hybride 1.

Ce mode de réalisation est particulièrement avantageux du fait que le pli hybride 1 conserve une souplesse satisfaisante, adaptée à la pose sur la pièce 3 à métalliser, et du fait d'une augmentation de la rigidité et de la résistance mécanique dudit pli hybride, ce qui permet de protéger la couche métallique 10 notamment lors de la pose avec des dispositifs automatisés. De plus, l'utilisation de fibres de verre permet de protéger la couche métallique 10 d'une éventuelle corrosion galvanique par exemple liée à une présence de fibres de carbone dans le matériau composite de la pièce 3.

Suivant d'autres variantes, la couche de liaison 11 est renforcée par des fibres organiques, de préférence isolantes électriquement, dans les mêmes proportions que dans le cas de fibres minérales 11a (entre 10% et 30% en masse du pli hybride 1), telles que des fibres d'aramides (Kevlar®, etc.). Dans la suite de la description, on ne considère que le cas où la couche de liaison 11 est renforcée par des fibres minérales 11a.

La couche de liaison 11 est solidaire de la couche métallique 10, par exemple du fait de propriétés adhésives intrinsèques.

Dans un autre mode préféré de réalisation du pli hybride 1, représenté sur la figure 1c, la couche de liaison 11 comporte des charges minérales 11b, sous la forme de granulats ou « fillers » dans la littérature anglo-saxonne, dans des proportions de préférence comprises entre 1% et 5% en masse du pli hybride 1.

Les charges minérales 11b sont par exemple des oxydes comportant du titane ou du zirconium, ou tout autre type de charge minérale permettant d'améliorer la compatibilité et l'adhérence entre la couche de liaison 11 et la couche métallique 10. Les charges minérales 11b sont réparties à l'interface entre la couche de liaison 11 et la couche métallique, et/ou dans ladite couche de liaison au moins entre les fibres minérales 11a et la couche métallique 10, la répartition étant de préférence sensiblement homogène.

Du fait de la continuité de la couche métallique 10, il est possible, pour une valeur de conductivité donnée, de fabriquer un pli hybride 1 d'épaisseur et de grammage sensiblement inférieurs à ceux d'un grillage en bronze.

Selon l'invention, une épaisseur de la couche métallique 10 de valeur inférieure à 50 µm (par exemple comprise entre 10 µm et 20 µm) est possible pour une conductivité équivalente à celles des grillages en bronze courants.

La valeur de l'épaisseur de la couche de liaison 11 est choisie notamment pour obtenir une épaisseur minimale du pli hybride 1 et assurer une résistance mécanique minimale dudit pli hybride pour éviter son endommagement notamment lors de sa pose. La valeur de l'épaisseur de la couche de liaison 11 est par exemple comprise entre 50 µm et 150 µm.

En considérant une couche métallique 10 en cuivre d'épaisseur de valeur voisine de 10 µm et une couche de liaison 11 en résine thermoplastique hautes performances à base de PEEK d'épaisseur de valeur voisine de 50 µm, un grammage de l'ordre de 150 à 180 g/m² est obtenu suivant la nature des fibres minérales 11a et/ou des charges minérales 11b de la couche de liaison 11, ce qui est largement inférieur aux grammages actuels obtenus avec des grillages en bronze consolidés au moyen de films en résine PEEK (de l'ordre de 300 g/m² minimum), ce qui permet de fabriquer des pièces en matériau composite métallisées de masses inférieures à celles des pièces en matériau composite métallisées conventionnelles.

Du fait de l'épaisseur, de la résistance mécanique et du grammage obtenus pour le pli hybride 1, une pose utilisant des moyens de pose automatique est possible.

Le pli hybride 1 est par exemple de forme rectangulaire, et avantageusement présenté sous la forme d'un ruban hybride caractérisé essentiellement par sa largeur, conditionnable en bobine.

De préférence, les largeurs des rubans hybrides sont inférieures aux dimensions voulues de la pièce 3, ce qui facilite la métallisation de pièces de grandes dimensions et/ou non-développables, et est compatible avec une pose automatique.

La largeur des rubans hybrides est par exemple adaptée aux courbures de la pièce 3 à fabriquer. Pour une pièce 3 non-développable, on réalise des rubans hybrides dont la largeur est de préférence comprise entre 3 mm et 30 mm. Pour une pièce 3 développable, on réalise par exemple des rubans hybrides dont la largeur est comprise entre 150 mm et 300 mm.

Le pli hybride 1 est adapté pour la métallisation de pièces en matériau composite comportant des fibres maintenues par une matrice en résine organique. Le pli hybride 1 est utilisé pour la métallisation de pièces avec la matrice desquelles la résine thermoplastique de la couche de liaison 11 est compatible, c'est-à-dire apte à se consolider par exemple par fusion, ce qui est le cas notamment pour des pièces à matrice thermoplastique, en considérant par exemple une couche de liaison 11 en résine thermoplastique de même type que la matrice thermoplastique de la pièce à métalliser.

Dans la suite de la description, on considère de manière non limitative le cas d'une métallisation d'une pièce 3 en matériau composite thermoplastique.

La présente invention concerne un procédé de fabrication de la pièce 3 en matériau composite thermoplastique métallisée, utilisant le pli hybride 1.

Dans une première étape connue du procédé de fabrication, on réalise une couche structurale 2 de la pièce 3 en déposant au moins un pli structural 20 en matériau composite à matrice 20b thermoplastique renforcée par des fibres 20a.

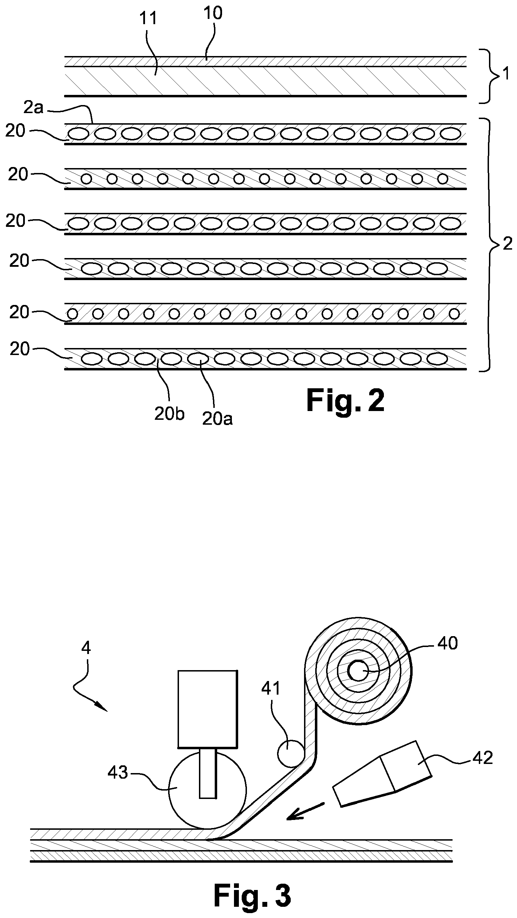

Dans l'exemple non limitatif de la figure 2, la couche structurale 2 est formée en empilant une pluralité de plis structuraux 20 de manière connue. Lesdits plis structuraux sont de préférence empilés sur un moule, non représenté, pour donner à la couche structurale 2 de la pièce 3 en matériau composite thermoplastique une forme voulue.

Les fibres 20a des plis structuraux 20 sont par exemple des fibres de carbone, de verre, d'aramide, etc. La matrice 20b thermoplastique d'imprégnation mise en oeuvre dans les plis structuraux 20 est de préférence une résine thermoplastique hautes performances, par exemple à base PEEK, de PEKK, de PPS, de PEI, etc.

Dans un mode préféré de mise en oeuvre, les plis structuraux 20 comportent des fibres de carbone imprégnées de résine à base de PEEK, et lesdites fibres de carbone sont longues ou continues.

Dans une seconde étape du procédé selon l'invention, on dépose sur une face extérieure 2a de la couche structurale 2 le pli hybride 1, ledit pli hybride étant déposé avec la couche de liaison 11 du côté de la face extérieure 2a de la couche structurale 2.

Dans une troisième étape du procédé de fabrication de la pièce 3, on effectue une opération de consolidation du pli hybride 1 avec la couche structurale 2, c'est-à-dire que ledit pli hybride est solidarisé sur la face extérieure 2a de la couche structurale 2, en utilisant des procédés connus de consolidation, comme par exemple un procédé de mise sous pression à hautes températures (généralement supérieures à 300°C) des différentes couches, par exemple en autoclave ou sous vide en étuve, un procédé de pose/consolidation en continu ou « in situ » (qui sera décrit plus loin), etc.

Les différents plis structuraux 20 formant la couche structurale 2 sont par exemple consolidés dans la troisième étape en même temps que le pli hybride 1, par exemple en autoclave ou sous vide en étuve. Dans un autre exemple non limitatif, les plis structuraux 20 sont consolidés dans une étape préalable pour former d'abord la couche structurale 2 consolidée, le pli hybride 1 étant consolidé dans la troisième étape avec la couche structurale 2 préalablement consolidée de manière indépendante.

Dans le cas où les plis structuraux 20 sont consolidés dans une étape préalable, la consolidation est effectuée de manière analogue soit pour tous lesdits plis structuraux simultanément, soit pli par pli en consolidant in situ chaque pli structural lors de sa pose sur le ou les plis structuraux déjà déposés et consolidés, soit suivant un autre mode de consolidation desdits différents plis structuraux.

Dans un mode particulier de mise en oeuvre du procédé, le pli hybride 1 est déposé sous la forme de rubans hybrides disposés bord à bord, par exemple sensiblement parallèles, et en pratiquant ou non un recouvrement entre des rubans voisins, suivant une orientation privilégiée.

Ce mode particulier s'avère particulièrement avantageux lorsque chaque pli structural 20 est déposé sous la forme de rubans structuraux disposés bord à bord, par exemple sensiblement parallèles. Avantageusement, les rubans hybrides ont des largeurs voisines de celles des rubans structuraux, afin de faciliter une pose utilisant le même procédé et le même dispositif de pose automatique pour les deux types de rubans.

La consolidation des différents rubans structuraux et hybride est de préférence une consolidation in situ.

Une consolidation in situ s'effectue par exemple avec un dispositif 4 de pose et consolidation automatique tel que représenté schématiquement sur la figure 3, comportant par exemple une tête de pose 40 sur laquelle on place une bobine de ruban structural ou hybride. La bobine est déroulée au travers d'un guide 41 avant la pose du ruban. Pour déposer le ruban, on chauffe le ruban et les plis déjà déposés et consolidés au niveau de leur surface de contact, par exemple au moyen d'une torche 42 soufflant de l'azote à la température supérieure à la température de fusion de la résine, ou au moyen d'autres techniques de chauffage type chauffe laser, infra rouges etc.

La fusion de la résine thermoplastique du ruban et d'un pli de surface sur lequel on dépose ledit ruban, associée à une pression exercée par un rouleau presseur 43 sur le ruban au niveau de sa surface de contact avec les plis déjà déposés, entraîne la consolidation au moins partielle du ruban déposé avec le pli de surface.

Certains paramètres de pose/consolidation d'un tel dispositif 4 sont ajustables : la température de chauffe du ruban (adaptation aux différents types de résines), la pression exercée par le rouleau presseur 43, la vitesse de dépose, etc.

Dans le cas d'une consolidation in situ du pli hybride 1, les paramètres de pose/consolidation sont de préférence ajustés pour le ruban hybride. Notamment, la pression exercée par le rouleau presseur 43 est de préférence adaptée à la résistance de la couche métallique 10 et/ou ajustée, ainsi que la vitesse de pose en fonction des différents types de résine pour assurer une consolidation efficace.

La présente invention concerne également une pièce 3 en matériau composite thermoplastique métallisée, notamment une telle pièce obtenue en mettant en oeuvre le procédé décrit précédemment, c'est-à-dire obtenue après la pose du pli hybride 1 et après consolidation des différentes couches constitutives de ladite pièce.

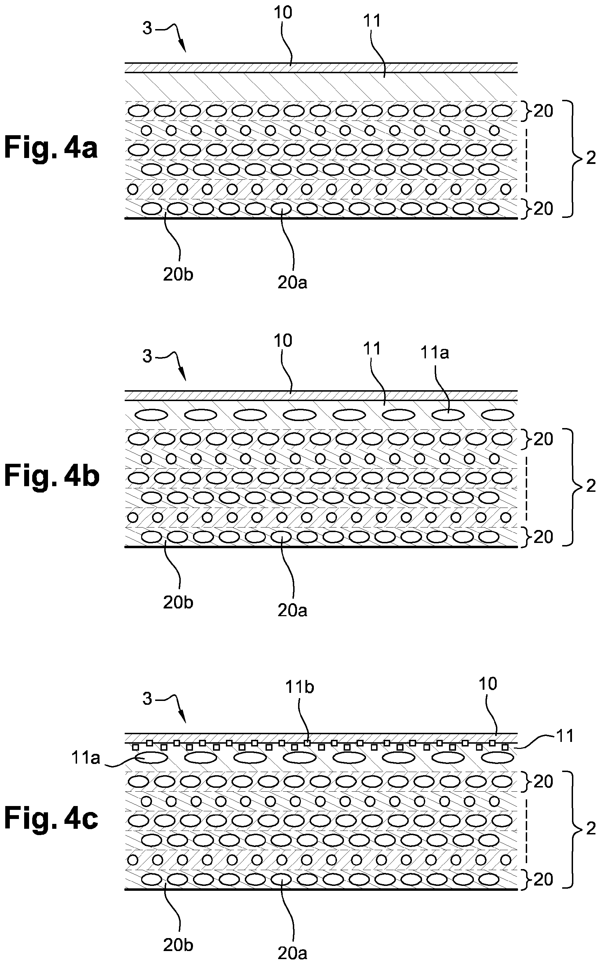

Après consolidation, la pièce 3, représentée schématiquement en coupe sur la figure 4a, consiste principalement en trois couches solidaires :
- une couche structurale 2,
- une couche métallique 10,
- une couche de liaison 11 entre ladite couche structurale et ladite couche métallique.

La couche structurale 2 est en matériau composite à matrice 20b en résine thermoplastique renforcée par des fibres 20a.

Les fibres 20a de ladite couche structurale 2 sont par exemple des fibres de carbone, de verre, d'aramide, etc. La matrice 20b thermoplastique est de préférence en résine thermoplastique hautes performances, par exemple à base de PEEK, de PEKK, de PPS, PEI etc.

De préférence, la couche structurale 2 comporte des fibres de carbone imprégnées de résine thermoplastique hautes performances, et lesdites fibres de carbone sont longues ou continues, disposées ou pas en plusieurs plis structuraux 20, les orientations des fibres de carbone pouvant être différentes d'un pli structural 20 à l'autre.

La couche métallique 10 est essentiellement continue et est de préférence une feuille d'aluminium ou de cuivre. La couche métallique 10 peut comporter dans certains cas des ouvertures imposées par la forme de la pièce, par exemple associées à des ouvertures de la pièce 3.

La couche de liaison 11 comporte de la résine thermoplastique compatible avec la matrice 20b thermoplastique formant la couche structurale 2, de préférence de même type que la matrice 20b thermoplastique de la couche structurale 2.

Dans un autre mode particulier de réalisation de la pièce 3 représenté schématiquement sur la figure 4b, la couche de liaison 11 est renforcée par des fibres minérales 11a. Les fibres minérales 11a sont par exemple des fibres de verre, tissées ou agencées en feutre agencées de façon sensiblement parallèle à la couche métallique 10, éventuellement en plusieurs sous-couches, ou encore des fibres courtes dispersées dans la couche de liaison 11. Les fibres minérales 11a renforcent la couche de liaison 11 dans des proportions comprises entre 10% et 30% en masse de la couche de liaison 11 plus la couche métallique 10.

Dans un autre mode préféré de réalisation de la pièce 3, représenté sur la figure 4c, la couche de liaison 11 comporte également des charges minérales 11b, par exemple des oxydes comportant du titane ou du zirconium, sous la forme de granulats dans des proportions de préférence comprises entre 1% et 5% en masse de la couche de liaison 11 plus la couche métallique 10. Les charges minérales sont réparties à l'interface entre ladite couche de liaison et la couche métallique 10, et/ou dans la couche de liaison 11 au moins entre les fibres minérales 11a et ladite couche métallique.

L'épaisseur de la couche métallique 10 est de préférence de valeur inférieure à 50 µm, par exemple comprise entre 10 µm et 20 µm, et l'épaisseur de la couche de liaison 11 est par exemple de valeur comprise entre 50 µm et 150 µm.

Une protection de la couche métallique 10 est par exemple assurée en mettant une ou plusieurs couches de finition de type peinture sur ladite couche métallique de la pièce 3.

En utilisant un pli hybride comportant une couche métallique mince essentiellement continue et une couche de liaison renforcée, l'invention permet de métalliser des pièces en matériau composite thermoplastique hautes performances avec des moyens de pose automatique, ce qui permet de réduire les coûts de fabrication desdites pièces. Il est de plus possible de fabriquer, à conductivité équivalente, des pièces de masse inférieure à celle de pièces en matériau composite thermoplastique métallisées conventionnelles, ce qui s'avère particulièrement avantageux pour la fabrication de pièces de structure d'aéronefs.

## Revendications

1. Procédé de fabrication par dépôt de plis d'une pièce (3) de structure d'aéronef exposée à la foudre, la pièce (3) devant comporter une couche structurale (2) en matériau composite comportant des fibres (20a) maintenues par une matrice (20b) en résine thermoplastique et, du côté d'une face extérieure (2a) de ladite couche structurale, une couche conductrice, ledit procédé comportant :
- une étape dans laquelle on dépose un ou des plis structuraux (20) formant la couche structurale (2),
- une étape dans laquelle on dépose sur la face extérieure (2a) de la couche structurale (2) un pli de métallisation (1) de protection contre les effets de la foudre, ledit pli de métallisation comportant dans une épaisseur une couche métallique (10) essentiellement continue et une couche de liaison (11) solidaire de ladite couche métallique et réalisée avec une résine thermoplastique renforcée par des fibres (11a) minérales ou organiques, ledit pli de métallisation étant déposé avec la couche de liaison (11) du côté de la face extérieure (2a) de la couche structurale (2),
- une étape de consolidation du pli de métallisation (1) avec la couche structurale (2),
**caractérisé en ce que** les fibres (11a) minérales ou organiques de la couche de liaison (11) du pli de métallisation représentent entre 10% et 30% en masse du pli de métallisation (1).

2. Procédé selon la revendication 1, dans lequel la couche de liaison (11) du pli de métallisation comporte des charges minérales (11b).

3. Procédé selon la revendication 2, dans lequel les charges minérales (11b) représentent entre 1% et 5% en masse du pli de métallisation (1).

4. Procédé selon l'une des revendications 1 à 3, dans lequel la résine thermoplastique de la couche de liaison (11) du pli de métallisation est en poly-éther-éther-cétone ou en poly-éther-cétone-cétone ou en poly-étherimide.

5. Procédé selon l'une des revendications 1 à 4, dans lequel on dépose le pli de métallisation (1) sur la face extérieure (2a) de la couche structurale (2) sous la forme de rubans hybrides disposés bord à bord suivant une orientation privilégiée.

6. Procédé selon la revendication 5, dans lequel on dépose chaque pli structural (20) sous la forme de rubans structuraux disposés bord à bord, et dans lequel les rubans hybrides ont des largeurs voisines de celles des rubans structuraux.

7. Procédé selon la revendication 6, dans lequel les rubans hybrides sont déposés avec un dispositif (4) de dépose automatique utilisé pour déposer les rubans structuraux.

8. Pièce (3) de structure d'aéronef exposée à la foudre, ladite pièce comportant une couche métallique (10) de protection contre les effets de la foudre et une couche structurale (2) en matériau composite comportant des fibres (20a) maintenues par une matrice (20b) en résine thermoplastique, dans laquelle ladite couche métallique est essentiellement continue et dans laquelle ladite pièce comporte entre la couche métallique (10) et la couche structurale (2) une couche de liaison (11) réalisée avec une résine thermoplastique renforcée par des fibres (11a) minérales ou organiques, **caractérisée en ce que** les fibres (11a) minérales ou organiques de la couche de liaison (11) représentent entre 10% et 30 % en masse de la couche de liaison (11) plus la couche métallique (10).

9. Pièce (3) selon la revendication 8, dans laquelle la couche de liaison (11) comporte des charges minérales (11b).

10. Pièce (3) selon la revendication 9, dans laquelle les charges minérales (11b) représentent entre 1% et 5% en masse de la couche de liaison (11) plus la couche métallique (10).

11. Pièce (3) selon l'une des revendications 8 à 10, dans laquelle la résine thermoplastique de la couche structurale (2) est à base de poly-éther-éther-cétone ou de poly-éther-cétone-cétone ou de poly-étherimide.

12. Pièce selon la revendication 11, dans laquelle les fibres (20a) de la couche structurale (2) sont des fibres longues ou continues de carbone.

## Patentansprüche

1. Verfahren zur Herstellung, durch Aufbringung von Lagen, eines blitzschlaggefährdeten Strukturteils (3) eines Luftfahrzeugs, wobei das Teil (3) eine Strukturschicht (2) aus Verbundmaterial, die von einer Matrix (20b) aus thermoplastischem Harz gehaltene Fasern (20a) aufweist, und, auf der Seite einer Außenfläche (2a) der Strukturschicht, eine leitende Schicht aufweisen muss, wobei das Verfahren umfasst:
- einen Schritt, in welchem eine oder mehrere Strukturlagen (20) aufgebracht werden, welche die Strukturschicht (2) bilden,
- einen Schritt, in welchem auf die Außenfläche (2a) der Strukturschicht (2) eine Metallisierungslage (1) zum Schutz vor den Auswirkungen von Blitzen aufgebracht wird, wobei die Metallisierungslage in einer Dicke eine metallische Schicht (10), die im Wesentlichen kontinuierlich ist, und eine Verbindungsschicht (11), die mit der metallischen Schicht fest verbunden ist und mit einem durch mineralische oder organische Fasern (11a) verstärkten thermoplastischen Harz hergestellt ist, aufweist, wobei die Metallisierungslage mit der Verbindungsschicht (11) auf der Seite der Außenfläche (2a) der Strukturschicht (2) aufgebracht wird,
- einen Schritt der Verfestigung der Metallisierungslage (1) mit der Strukturschicht (2), **dadurch gekennzeichnet, dass** die mineralischen oder organischen Fasern (11a) der Verbindungsschicht (11) der Metallisierungslage zwischen 10 und 30 Massen-% der Metallisierungslage (1) repräsentieren.

2. Verfahren nach Anspruch 1, wobei die Verbindungsschicht (11) der Metallisierungslage mineralische Füllstoffe (11b) aufweist.

3. Verfahren nach Anspruch 2, wobei die mineralischen Füllstoffe (11b) zwischen 1 und 5 Massen-% der Metallisierungslage (1) repräsentieren.

4. Verfahren nach einem der Ansprüche 1 bis 3, wobei das thermoplastische Harz der Verbindungsschicht (11) der Metallisierungslage aus Polyetheretherketon oder aus Polyetherketoneketon oder aus Polyetherimid besteht.

5. Verfahren nach einem der Ansprüche 1 bis 4, wobei die Metallisierungslage (1) auf die Außenfläche (2a) der Strukturschicht (2) in der Form von Hybridbändern aufgebracht wird, die mit einer bevorzugten Ausrichtung Seite an Seite angeordnet werden.

6. Verfahren nach Anspruch 5, wobei jede Strukturlage (20) in der Form von Seite an Seite angeordneten Strukturbändern aufgebracht wird und wobei die Hybridbänder Breiten aufweisen, die denjenigen der Strukturbänder ähnlich sind.

7. Verfahren nach Anspruch 6, wobei die Hybridbänder mit einer Vorrichtung (4) zur automatischen Aufbringung aufgebracht werden, die verwendet wird, um die Strukturbänder aufzubringen.

8. Blitzschlaggefährdetes Strukturteil (3) eines Luftfahrzeugs, wobei das Teil eine metallische Schicht (10) zum Schutz vor den Auswirkungen von Blitzen und eine Strukturschicht (2) aus Verbundmaterial, die von einer Matrix (20b) aus thermoplastischem Harz gehaltene Fasern (20a) aufweist, umfasst, wobei die metallische Schicht im Wesentlichen kontinuierlich ist und wobei das Teil zwischen der metallischen Schicht (10) und der Strukturschicht (2) eine Verbindungsschicht (11) aufweist, die mit einem durch mineralische oder organische Fasern (11a) verstärkten thermoplastischen Harz hergestellt ist, **dadurch gekennzeichnet, dass** die mineralischen oder organischen Fasern (11a) der Verbindungsschicht (11) zwischen 10 und 30 Massen-% der Verbindungsschicht (11) plus der metallischen Schicht (10) repräsentieren.

9. Teil (3) nach Anspruch 8, wobei die Verbindungsschicht (11) mineralische Füllstoffe (11b) aufweist.

10. Teil (3) nach Anspruch 9, wobei die mineralischen Füllstoffe (11b) zwischen 1 und 5 Massen-% der Verbindungsschicht (11) plus der metallischen Schicht (10) repräsentieren.

11. Teil (3) nach einem der Ansprüche 8 bis 10, wobei das thermoplastische Harz der Strukturschicht (2) auf Polyetheretherketon oder auf Polyetherketoneketon oder auf Polyetherimid basiert.

12. Teil nach Anspruch 11, wobei die Fasern (20a) der Strukturschicht (2) lange Kohlenstofffasern oder Kohlenstoffendlosfasern sind.

## Claims

1. Process for manufacturing, by deposition of plies, a structural aircraft part (3) exposed to lightning, the part (3) having to comprise a structural layer (2) made of composite material comprising fibres (20a) held by a matrix (20b) made of thermoplastic resin and, on the side of an exterior face (2a) of said structural layer, a conductive layer, said process comprising:
- a step in which one or more structural plies (20) are deposited forming the structural layer (2),
- a step in which a metallization ply (1) for protection against the effects of lightning is deposited on the exterior face (2a) of the structural layer (2), said metallization ply comprising in a thickness an essentially continuous metal layer (10) and a tie layer (11) attached to said metal layer and produced with a thermoplastic resin reinforced by mineral or organic fibres (11a), said metallization ply being deposited with the tie layer (11) on the side of the exterior face (2a) of the structural layer (2),
- a step of consolidating the metallization ply (1) with the structural layer (2),
**characterized in that** the mineral or organic fibres (11a) of the tie layer (11) of the metallization ply represent between 10% and 30% by mass of the metallization ply (1).

2. Process according to Claim 1, in which the tie layer (11) of the metallization ply comprises mineral fillers (11b).

3. Process according to Claim 2, in which the mineral fillers (11b) represent between 1% and 5% by mass of the metallization ply (1).

4. Process according to one of Claims 1 to 3, in which the thermoplastic resin of the tie layer (11) of the metallization ply is made of polyetheretherketone or of polyetherketoneketone or of polyetherimide.

5. Process according to one of Claims 1 to 4, in which the metallization ply (1) is deposited on the exterior face (2a) of the structural layer (2) in the form of hybrid tapes arranged edge-to-edge along a favoured orientation.

6. Process according to Claim 5, in which each structural ply (20) is deposited in the form of structural tapes arranged edge-to-edge, and in which the hybrid tapes have widths similar to those of the structural tapes.

7. Process according to Claim 6, in which the hybrid tapes are deposited with an automatic deposition device (4) used for depositing the structural tapes.

8. Structural aircraft part (3) exposed to lightning, said part comprising a metal layer (10) for protection against the effects of lightning and a structural layer (2) made of composite material comprising fibres (20a) held by a matrix (20b) made of thermoplastic resin, in which said metal layer is essentially continuous and in which said part comprises, between the metal layer (10) and the structural layer (2), a tie layer (11) produced with a thermoplastic resin reinforced by mineral or organic fibres (11a), **characterized in that** the mineral or organic fibres (11a) of the tie layer (11) represent between 10% and 30% by mass of the tie layer (11) plus the metal layer (10).

9. Part (3) according to Claim 8, in which the tie layer (11) comprises mineral fillers (11b).

10. Part (3) according to Claim 9, in which the mineral fillers (11b) represent between 1% and 5% by mass of the tie layer (11) plus the metal layer (10).

11. Part (3) according to one of Claims 8 to 10, in which the thermoplastic resin of the structural layer (2) is based on polyetheretherketone or on polyetherketoneketone or on polyetherimide.

12. Part according to Claim 11, in which the fibres (20a) of the structural layer (2) are long or continuous carbon fibres.
